# EUROPÄISCHE PATENTANMELDUNG

(11) **EP 2 608 398 A1**
(43) Veröffentlichungstag der Anmeldung: **26.06.2013**
(21) Anmeldenummer: 11194197.7
(22) Anmeldetag: 19.12.2011
(51) Int. Cl.: H02M 7/797

(54) **Modulare Stromrichterschaltung**

(71) Anmelder: Siemens Aktiengesellschaft, 80333 München (DE)
(72) Erfinder: Hiller, Marc, Dr., 91207 Lauf an der Pegnitz (DE)

(57) **Zusammenfassung**

Es wird eine Stromrichterschaltung (4), insbesondere für einen Fahrantrieb eines Elektro-Fahrzeugs, angegeben. Die Stromrichterschaltung (4) umfasst wenigstens zwei Submodule (11;13a,13b) in Reihenschaltung, die über eine Induktivität (10) elektrische Leistung aus einer eine Gleichspannung (Ub) abgebenden Leistungsquelle (5) beziehen. Jedes Submodul (11;13a,13b) weist hierbei eingangsseitig eine einphasige Halbbrücke (20) und lastseitig eine einphasige Vollbrücke (21) auf, wobei die Halbbrücke (20) und die Vollbrücke (21) gleichspannungsseitig zusammen mit einem Zwischenkreiskondensator (23) parallel zueinander in einen Zwischenkreis (26) geschaltet sind. Die beiden Submodule (11;13a,13b) sind dabei mit jeweils einer Zwischenkreisschiene (24,25) unmittelbar miteinander verbunden.

## Beschreibung

Die Erfindung betrifft eine Stromrichterschaltung gemäß dem Oberbegriff des Anspruchs 1 und einen Fahrzeugantrieb mit einer solchen Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al., "Modularer Hochfrequenz Umrichter für Fahrzeugantriebe", EMA 2010, 08. bis 09. September 2010, Aschaffenburg bekannt.

Die bekannte Stromrichterschaltung ist zum Umwandeln einer Gleichspannung aus einer elektrischen Leistungsquelle in mehrere Wechselspannungen vorgesehen. Die einzelnen Wechselspannungen werden dabei durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegeben werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verbunden ist, sowie eine Eingangshalbbrücke in jedem Submodul. Die Vollbrücke und die Halbbrücke sind submodulintern gleichspannungsseitig verbunden.

Parallel zur Vollbrücke und zur Eingangshalbbrücke ist in jedem Submodul ein Zwischenkreiskondensator verbunden, der elektrische Energie, beispielsweise aus einem Blindleistungsfluss von den Motorwicklungen, zwischenspeichern kann.

Der bekannte Modulare Hochfrequenz-Umrichter hat gegenüber klassischen Umrichtertopologien insbesondere den Vorteil, dass er infolge kleiner Bauteile besonders kompakt und leicht aufbaubar ist. Mit zunehmender Modulanzahl werden diese Vorteile aber - insbesondere aufgrund des modularen Bauprinzips - ganz oder zumindest teilweise aufgewogen durch eine hohe Anzahl an erforderlichen Ansteuerbaugruppen und Kommunikationsschnittstellen, die einen entsprechend hohen Herstellungsaufwand bedingen. Zunehmend nachteilig wird mit wachsender Modulanzahl auch die große Anzahl an Kühlkörpern.

Der Erfindung liegt die Aufgabe zugrunde, eine diesbezüglich verbesserte Stromrichterschaltung und einen diesbezüglich verbesserten Fahrzeugantrieb anzugeben.

Bezüglich der Stromrichterschaltung wird die Aufgabe erfindungsgemäß gelöst durch die Merkmale des Anspruchs 1. Bezüglich des Fahrzeugantriebs wird die Aufgabe erfindungsgemäß gelöst durch die Merkmale des Anspruchs 8. Vorteilhafte Ausgestaltungsformen und Weiterbildungen der Erfindung sind Gegenstand der abhängigen Ansprüche.

Die Stromrichterschaltung umfasst danach wenigstens zwei Submodule in Reihenschaltung, wobei die Stromrichterschaltung, und damit deren Submodule über eine Induktivität elektrische Leistung aus einer eine Gleichspannung abgebenden Leistungsquelle beziehen. Jedes Submodul weist eingangsseitig eine einphasige Halbbrücke und lastseitig eine einphasige Vollbrücke auf. Die Halbbrücke und die Vollbrücke sind dabei gleichspannungsseitig parallel zueinander in einen Zwischenkreis geschaltet. Parallel zu der Halbbrücke und der Vollbrücke ist in den Zwischenkreis ferner ein Zwischenkreiskondensator geschaltet.

Erfindungsgemäß sind die beiden Submodule mit jeweils einer Zwischenkreisschiene - d.h. einem Pol ihrer jeweiligen Zwischenkreise - unmittelbar miteinander verbunden. Die beiden solchermaßen verbundenen Submodule sind im Sinne einer prägnanten Nomenklatur im Folgenden auch als "Zwillingsmodule" bezeichnet.

Vorzugsweise hat die Stromrichterschaltung wesentlich mehr als zwei Submodule, und hierbei insbesondere eine gerade Anzahl von Submodulen. In diesem Fall sind vorzugsweise aufeinander folgende Submodule jeweils paarweise zu "Zwillingsmodulen" zusammengeschaltet. Grundsätzlich ist im Rahmen der Erfindung aber auch eine Kombination von Zwillingsmodulen mit Einzel-Submodulen denkbar.

Die Kopplung der Zwischenkreise der zusammengehörigen Zwillingsmodule hat den Vorteil, dass beide Zwillingsmodule ein gemeinsames elektrisches Potential aufweisen. Dies ermöglicht eine wesentliche Vereinfachung des elektrischen und elektronischen Aufbaus der einzelnen Zwillingsmodule und somit eine besonders kompakte und einfache Bauweise der Stromrichterschaltung.

So sind in einer bevorzugten Bauform der Stromrichterschaltung die Zwischenkreise der beiden zusammengehörigen Submodule nicht nur miteinander verbunden. Vielmehr ist die Zwischenkreisschiene, über die jedes Zwillingsmodul mit dem jeweils anderen kurzgeschlossen ist, physikalisch lediglich einfach für beide Zwillingsmodule vorgesehen. Mit anderen Worten teilen sich beide Zwillingsmodule eine gemeinsame Zwischenkreisschiene, so dass für jedes Paar von Zwillingsmodulen der Bauraum und die Schaltungsbestandteile für eine Zwischenkreisschiene und die Verbindung zwischen den Zwillingsmodulen eingespart wird.

Zusätzlich oder alternativ hierzu ist - sowohl im Sinne eines kompakten Aufbaus als auch im Sinne einer rationalen Herstellung - vorgesehen, dass die beiden Submodule zu einer zusammenhängenden Baueinheit integriert sind.

Um beide Zwillingsmodule jeweils bedarfsoptimiert ansteuern zu können, ist jedem der beiden zusammengehörigen Zwillingsmodule zweckmäßigerweise ein unabhängiger Regelkreis zur Regelung des Aussteuergrads für die Taktung zugeordnet. Unabhängigkeit der Regelkreise bedeutet hierbei, dass die einem Zwillingsmodul zugeordnete Regelung die Aussteuerung des jeweils anderen Zwillingsmoduls unbeeinflusst lässt. Dessen ungeachtet greifen die Schaltkreise der beiden Zwillingsmodule aber zweckmäßigerweise zumindest teilweise auf gemeinsame Schaltungsbestandteile (also Teile der Schaltungs-Hardware) zu. Insbesondere die eigentliche Regelungslogik beider Zwillingsmodule ist vorzugsweise in einer gemeinsamen Ansteuerbaugruppe, beispielsweise einem Mikrocontroller oder einem ASIC, integriert. Zusätzlich oder alternativ greifen beide zusammengehörigen Zwillingsmodule für die Kommunikation mit einer submodulexternen Steuereinheit zweckmäßigerweise auch auf eine gemeinsame Kommunikationsschnittstelle zu. Zur weiteren Bauteilreduzierung teilen sich vorzugsweise beide zusammengehörigen Zwillingsmodule wiederum zusätzlich oder alternativ auch einen gemeinsamen Kühlkörper.

Zur Vereinfachung der modulinternen Elektronik der beiden zusammengehörigen Zwillingsmodule ist dieser Elektronik bevorzugt das elektrische Potential der miteinander verbundenen Zwischenkreisschienen als gemeinsames Bezugspotential zugeführt.

Vorzugsweise haben die Submodule der Stromrichterschaltung (und somit insbesondere die zusammengehörigen Zwillingsmodule) einen jeweils lediglich einphasigen Lastausgang. In einer für bestimmte Anwendungen (insbesondere für die Ansteuerung von gewöhnlichen drei-phasigen Standardmotoren) vorteilhaften Bauform ist der Vollbrücke mindestens eines Submoduls wenigstens eine weitere Wechselrichterhalbbrücke parallel geschaltet, die zusammen mit der Vollbrücke eine mehrphasige (insbesondere dreiphasige) Wechselrichter-Brückenschaltung bildet. So können im Rahmen der Erfindung insbesondere die Wechselrichter der beiden zusammengehörigen Zwillingsmodule mehrphasig, insbesondere dreiphasig ausgebildet sein.

Der erfindungsgemäße Fahrzeugantrieb umfasst mindestens einen Elektromotor zum Antrieb mindestens eines Fahrzeugrades. Der Fahrzeugantrieb umfasst des Weiteren die vorstehend beschriebene erfindungsgemäße Stromrichterschaltung. Die Submodule, insbesondere die zusammengehörigen Zwillingsmodule sind hierbei lastseitig mit dem mindestens einen Elektromotor verbunden.

In einer zweckmäßigen Ausführungsform umfasst der Fahrzeugantrieb mehrere Elektromotoren, die auf verschiedene Fahrzeugräder wirken. In diesem Fall können die Submodule (insbesondere die zusammengehörigen Zwillingsmodule) lastseitig auch mit verschiedenen Elektromotoren verbunden sein.

Nachfolgend ist ein Ausführungsbeispiel der Erfindung anhand einer Zeichnung näher erläutert. Darin zeigen:
- FIG 1: in einem schematisch vereinfachten Schaltbild einen Fahrzeugantrieb mit zwei Elektromotoren zur Ansteuerung zweier Räder eines Kraftfahrzeugs sowie mit einer modularen Stromrichterschaltung zur Versorgung der Elektromotoren, wobei die Stromrichterschaltung in Reihe sechs jeweils paarweise zu Zwillingsmodulen zusammengeschaltete Submodulen umfasst, und
- FIG 2: in einem Schaltbild ein Doppelmodul mit zwei zusammengeschalteten Zwillingsmodulen der Stromrichterschaltung.

Einander entsprechende Teile und Größen sind in allen Figuren stets mit gleichen Bezugszeichen versehen.

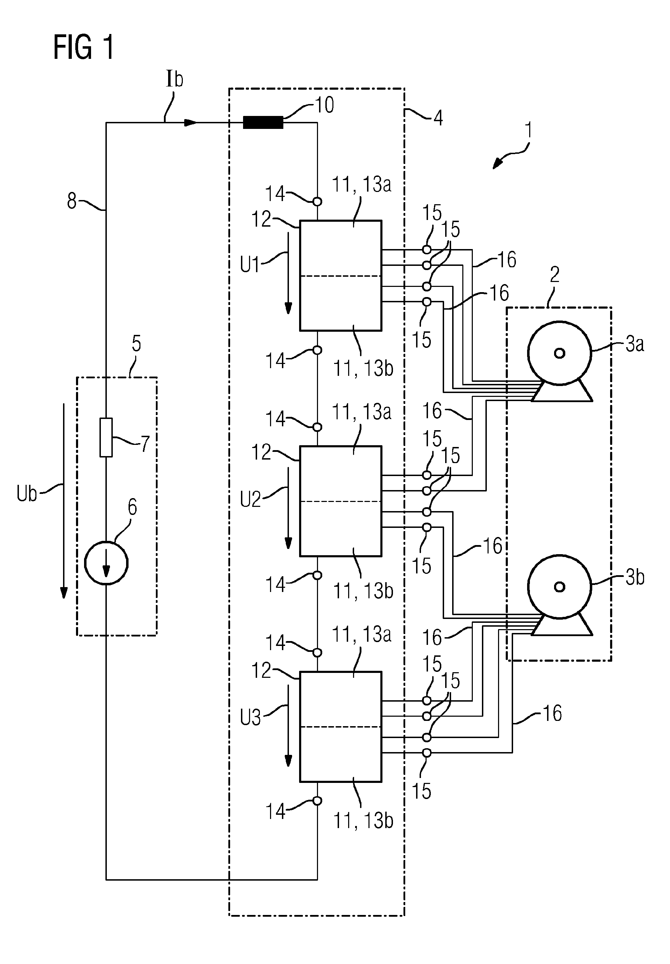

In FIG 1 ist in grober schematischer Vereinfachung ein Fahrzeugantrieb 1 für ein (nicht näher dargestelltes) Elektro-Fahrzeug dargestellt. Der Fahrzeugantrieb 1 umfasst einen elektrischen Verbraucher 2, der im dargestellten Beispiel durch zwei jeweils dreiphasige Elektromotoren 3a und 3b gebildet ist, wobei jeder dieser Elektromotoren 3a, 3b ein zugeordnetes Rad des Fahrzeugs antreibt.

Der Fahrzeugantrieb 1 umfasst des Weiteren eine Stromrichterschaltung 4, die den Verbraucher 2 (also die Elektromotoren 3a, 3b) mit elektrischer Leistung aus einer elektrischen Leistungsquelle in Form einer (Fahrzeug-) Batterie 5 versorgt.

Die elektrischen Eigenschaften der Batterie 5 sind im Ersatzschaltbild gemäß FIG 1 durch eine Spannungsquelle 6 mit einem dazu in Reihe angeschlossenen Innenwiderstand 7 repräsentiert. Die Batterie 5 legt an die Stromrichterschaltung 4 über einen Batteriestromkreis 8 eine Batteriespannung Ub an und gibt an die Stromrichterschaltung 4 einen Batteriestrom mit einer Batteriestromstärke Ib ab.

Die Stromrichterschaltung 4 weist eingangsseitig eine Induktivität 10 auf, die schaltungstechnisch insbesondere durch eine Spule realisiert ist. An diese Induktivität 10 schließt sich eine Reihenschaltung aus sechs Submodulen 11 an. Die sechs Submodule 11 sind hierbei jeweils paarweise zu Doppelmodulen 12 zusammengeschlossen. Jedes Doppelmodul 12 umfasst also zwei aufeinander folgende Submodule 11, die einander Zwillingsmodule 13a und 13b zugeordnet sind.

Jedes Doppelmodul 12 ist mit zwei Eingangsklemmen 14 in den Batteriestromkreis 8 geschaltet. Zwischen den Eingangsklemmen 14 eines jeden der drei Doppelmodule 12 fällt jeweils eine Teilspannung Ui (mit i=1,2,3) ab, die sich jeweils wiederum auf die beiden Zwillingsmodule 13a,13b eines jeden Doppelmoduls 12 aufteilt.

Lastseitig ist jedes der Submodule 11 jeweils über zwei Ausgangsklemmen 15 an eine zugeordnete Phase 16 eines der Elek tromotoren 3a und 3b angeschlossen. Basierend auf den Teilspannungen Ui versorgen die Submodule 11 die Elektromotoren 3a und 3b mit elektrischer Energie.

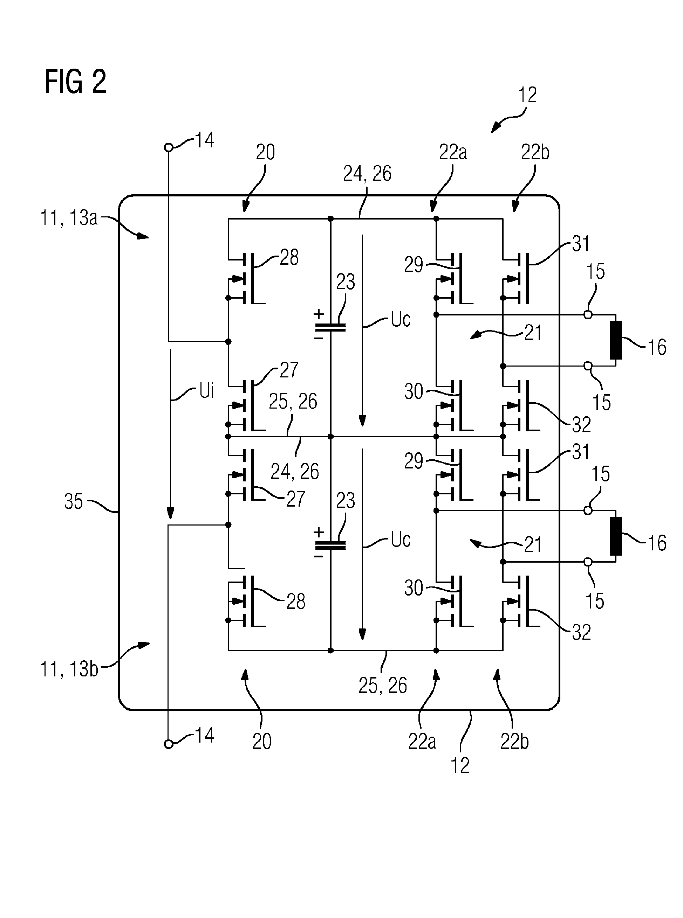

Eines der identisch aufgebauten Doppelmodule 12 ist in FIG 2 näher dargestellt. Wie dieser Darstellung zu entnehmen ist, weist jedes der beiden Zwillingsmodule 13a, 13b des Doppelmoduls 12 jeweils eine Eingangshalbbrücke 20 und eine Ausgangsvollbrücke 21 auf, wobei letztere wiederum aus zwei Ausgangshalbbrücken 22a und 22b gebildet ist. Jedes der beiden Zwillingsmodule 13a und 13b weist weiterhin einen Zwischenkreiskondensator 23 auf an dem eine Kondensatorspannung Uc anliegt. Die Eingangshalbbrücke 20, die Ausgangshalbbrücken 22a und 22b und der Zwischenkreiskondensator 23 jedes Zwillingsmoduls 13a,13b sind parallel zueinander zwischen eine Plus-Schiene 24 und eine Minus-Schiene 25 eines Zwischenkreises 26 geschaltet.

Die Eingangshalbbrücke 20 eines jeden Zwillingsmoduls 13a,13b weist einen ersten Schalter 27 und einen dazu in Reihe geschalteten zweiten Schalter 28 auf, zwischen denen jeweils eine der beiden Eingangsklemmen 14 angeschlossen ist.

Die Ausgangshalbbrücken 22a und 22b jedes Zwillingsmoduls 13a, 13b sind analog zu der Eingangshalbbrücke 20 aufgebaut. Entsprechend weist jede der Ausgangshalbbrücken 22a und 22b eine Reihenschaltung aus zwei Schaltern 29 und 30 bzw. 31 und 32 auf, wobei zwischen den Schaltern 29 und 30 der Ausgangshalbbrücke 22a sowie zwischen den Schaltern 31 und 32 der Ausgangshalbbrücke 22b jeweils die zugeordnete Phase 16 des Elektromotors 3a oder 3b angeklemmt ist.

Die Schalter 27-32 sind hier als Leistungshalbleiterschalter, beispielsweise MOSFETs (Metalloxid-Feldeffekttransistor) ausgebildet. Abhängig von der Art des Leistungshalbleiterschalters können zusätzlich antiparallel zu den Schaltern 29-32 der Ausgangshalbbrücken 22a und 22b Freilaufdioden geschaltet sein.

Wie aus FIG 2 ersichtlich ist, sind die Zwillingsmodule 13a und 13b des Doppelmoduls 12 mit ihren jeweiligen Zwischenkreisen 26 zusammengeschaltet, indem die Minus-Schiene 25 des Zwillingsmoduls 13a zugleich auch die Plus-Schiene 24 des Zwillingsmoduls 13b bildet.

Wie aus FIG 2 zu entnehmen ist, sind die Schalter 27 der Eingangshalbbrücken 20 in Serie zwischen die Eingangsklemmen 14 geschaltet, so dass die Teilspannung Ui über den Schaltern 27 anliegt. Der jeweils zweite Schalter 28 der Eingangshalbbrücke 20 ist jeweils zwischen die Eingangsklemme 14 und die Vollbrücke 21 geschaltet. Somit kann durch Schließen eines der Schalter 27 aus Sicht der zugehörigen Vollbrücke 21 der Eingang kurzgeschlossen werden, während durch Schließen des Schalter 28 (bei geöffnetem Schalter 27) die Vollbrücke 21 in den Batteriestromkreis 8 gelegt werden kann. Werden in jedem Zwillingsmodul 13a, 13b die Schalter 27 und 28 wechselweise geöffnet und geschlossen, ist durch die Eingangshalbbrücke 20 in Zusammenwirkung mit der Induktivität 10 ein Hochsetzsteller geschaffen, der die Summe der Teilspannungen Ut auf einen die Batteriespannung Ub übersteigenden Wert hochsetzt.

Durch geeignete Ansteuerung der Schalter 29-32 wird die im Zwischenkreis 26 jedes Zwillingsmoduls 13a,13b anliegende Gleichspannung in eine Wechselspannung umgerichtet, die an die zugeordnete Phase 16 eines der Elektromotoren 3a,3b angegeben wird.

Wie FIG 2 zu entnehmen ist, sind die beiden zusammengehörigen Zwillingsmodule 13a, 13b eines Doppelmoduls 12 zu einer zusammenhängenden Baueinheit 35 integriert, insbesondere in einem gemeinsamen Gehäuse aufgenommen.

Jedem der beiden Zwillingsmodule 13a, 13b ist ein eigener (nicht näher dargestellte) Regelkreis zugeordnet, über den der Aussteuergrad für die Taktung unabhängig von dem andern Zwillingsmodul geregelt werden kann. Die beiden Regelkreise nutzen hierbei die modulinterne Elektronik weitestgehend gemeinsam. Insbesondere ist für jedes Doppelmodul 12 lediglich eine (nicht näher dargestellte) Ansteuerbaugruppe vorgesehen, die beide Zwillingsmodule 13a, 13b teilen. Der Ansteuergruppe ist das elektrische Potential der gemeinsamen Zwischenkreisschiene 24 bzw. 25 als Bezugspotential zugeführt. Weiterhin umfasst jedes Doppelmodul 12 lediglich einen (nicht näher dargestellten) Kühlkörper, den beide Zwillingsmodule 13a, 13b teilen. Schließlich umfasst jedes Doppelmodul 12 auch lediglich eine (nicht näher dargestellte) Kommunikationsschnittstelle, über die beide Zwillingsmodule 13a, 13b mit einer übergeordneten, modulexternen Steuereinheit kommunizieren.

## Patentansprüche

1. Stromrichterschaltung (4), umfassend wenigstens zwei Submodule (11;13a,13b) in Reihenschaltung, die über eine Induktivität (10) elektrische Leistung aus einer eine Gleichspannung (Ub) abgebenden Leistungsquelle (5) bezieht,
- wobei jedes Submodul (11;13a,13b) eingangsseitig eine einphasige Halbbrücke (20) und lastseitig eine einphasige Vollbrücke (21) aufweist, und
- wobei die Halbbrücke (20) und die Vollbrücke (21) gleichspannungsseitig zusammen mit einem Zwischenkreiskondensator (23) parallel zueinander in einen Zwischenkreis (26) geschaltet sind,
**dadurch gekennzeichnet, dass** die beiden Submodule (11;13a,13b) mit jeweils einer Zwischenkreisschiene (24,25) unmittelbar miteinander verbunden sind.

2. Stromrichterschaltung (4) nach Anspruch 1, **dadurch gekennzeichnet , dass** die beiden Submodule (11;13a,13b) eine gemeinsame Zwischenkreisschiene teilen.

3. Stromrichterschaltung (4) nach Anspruch 1 oder 2, **dadurch gekennzeichnet , dass** die beiden Submodule (11;13a,13b) zu einer zusammenhängenden Baueinheit (35) integriert sind.

4. Stromrichterschaltung (4) nach einem der Ansprüche 1 bis 3, **dadurch gekennzeichnet , dass** jedem der beiden Submodule (11;13a,13b) einen unabhängigen Regelkreis zur Regelung des Aussteuergrads für die Taktung zugeordnet ist.

5. Stromrichterschaltung (4) nach Anspruch 4, **dadurch gekennzeichnet , dass** die beiden Submodule (11;13a,13b) mindestens einen Schaltungsbestandteil der Regelkreise und/oder einen Kühlkörper und/oder eine Kommunikationsschnittstelle zu einer submodulexternen Steuereinheit teilen.

6. Stromrichterschaltung (4) nach einem der Ansprüche 1 bis 5, **dadurch gekennzeichnet , dass** der modulinternen Elektronik beider Submodule (11;13a,13b) das elektrische Potential der miteinander verbundenen Zwischenkreisschienen (24,25) als Bezugspotential zugeführt ist.

7. Stromrichterschaltung (1) nach einem der Ansprüche 1 bis 6, **dadurch gekennzeichnet , dass** der Vollbrücke (21) jedes der beiden Submodule (11;13a,13b) wenigstens eine weitere Wechselrichterhalbbrücke parallel geschaltet ist, die zusammen mit der Vollbrücke (21) eine mehrphasige Wechselrichter-Brückenschaltung bildet.

8. Fahrzeugantrieb (1) mit mindestens einem Elektromotor (3a,3b) zum Antrieb mindestens eines Fahrzeugrades sowie mit der Stromrichterschaltung (4) gemäß einem der Ansprüche 1 bis 7, wobei die Submodule (11;13a,13b) lastseitig mit dem mindestens einen Elektromotor (3a,3b) verbunden sind.
